# EUROPEAN PATENT APPLICATION

(11) **EP 4 738 148 A1**
(43) Date of publication of application: **06.05.2026**
(21) Application number: 24830923.9
(22) Date of filing: 27.06.2024
(51) Int. Cl.: G06F 16/957

(54) **INFORMATION PRESENTATION METHOD AND APPARATUS, AND DEVICE, COMPUTER-READABLE STORAGE MEDIUM AND PRODUCT**

(30) Priority: 27.06.2023 CN 202310774478
(71) Applicant: Beijing Zitiao Network Technology Co., Ltd., Beijing 100190 (CN)
(72) Inventor: YAN, Yilan, Beijing 100028 (CN); LI, Yaping, Beijing 100028 (CN)
(74) Representative: Isarpatent
(86) International application number: PCT/CN2024/102142
(87) International publication number: WO 2025/002291

(57) **Abstract**

A method, apparatus, device, computer-readable storage medium and product for information presentation are provided, and the method includes: displaying an information presentation interface in response to a predetermined operation triggered by a user, where the information presentation interface includes at least one user identifier corresponding to the user meeting a predetermined condition and a predetermined setting control, and the at least one user identifier is displayed based on a predetermined first display state respectively; and switching, in response to a setting operation generated by the user based on the setting control, a display state of the at least one user identifier to a predetermined second display state.

## Description

The present application claims priority to Chinese Patent Application No. 202310774478.9, filed on June 27, 2023, and entitled "METHOD, APPARATUS, DEVICE, COMPUTER READABLE STORAGE MEDIUM AND PRODUCT FOR INFORMATION PRESENTATION", the entirety of which is incorporated herein by reference.

### FIELD

Embodiments of the disclosure relate to a technical field of interface interaction, in particular to a method, apparatus, device, computer readable storage medium and product for information presentation.

### BACKGROUND

When a user uses an Internet application, a function interface with a predetermined function may be displayed by triggering a predetermined operation. However, if the user has not authorized the predetermined function, the function interface does not present any content associated with other users. The content presented in the function interface is relatively limited, and the interaction mode is rather monotonous, resulting in a poor user experience.

### SUMMARY

Embodiments of the disclosure provide a method, an apparatus, a device, a computer readable storage medium and a product for information presentation, which are used for solving the technical problem of relatively limited content presented in a current function interface and relatively monotonous interaction mode.

**In** a first aspect, an embodiment of the disclosure provides a method for information presentation. The method includes: displaying an information presentation interface in response to a predetermined operation triggered by a user, the information presentation interface including at least one user identifier corresponding to the user meeting a predetermined condition and a predetermined setting control, and the at least one user identifier being displayed based on a predetermined first display state respectively; and switching, in response to a setting operation generated by the user based on the setting control, a display state of the at least one user identifier to a predetermined second display state.

**In** a second aspect, an embodiment of the disclosure provides an apparatus for information presentation. The apparatus includes: a display module configured to display an information presentation interface in response to a predetermined operation triggered by a user, the information presentation interface including at least one user identifier corresponding to the user meeting a predetermined condition and a predetermined setting control, and the at least one user identifier being displayed based on a predetermined first display state respectively; and a switching module configured to switch, in response to a setting operation generated by the user based on the setting control, a display state of the at least one user identifier to a predetermined second display state.

In a third aspect, an embodiment of the disclosure provides an electronic device. The electronic device includes: a processor and a memory; the memory storing computer executable instructions; and the processor executing the computer-executable instructions stored in the memory, causing the at least one processor to perform the method for information presentation of the first aspect and various possible designs of the first aspect.

In a fourth aspect, an embodiment of the disclosure provides a computer-readable storage medium. The computer-readable storage medium has computer-executable instructions stored thereon, and the computer-executable instructions implement, when executed by a processor, the method for information presentation of the first aspect and various possible designs of the first aspect.

In a fifth aspect, an embodiment of the disclosure provides a computer program product. The computer program product includes a computer program. The computer program, when executed by a processor, implements the method for information presentation of the first aspect and various possible designs of the first aspect.

### BRIEF DESCRIPTION OF DRAWINGS

In order to more clearly illustrate embodiments of the disclosure or technical solutions in the prior art, accompanying drawings used in description of the embodiments or the prior art will be briefly introduced below, and it will be apparent that the drawings in the following description are some embodiments of the disclosure, and for those skilled in the art, other drawings may also be obtained according to these drawings without creative efforts.
FIG. 1 is a schematic flowchart of a method for information presentation provided by an embodiment of the disclosure;
FIG. 2 is a schematic diagram of an interface interaction provided by an embodiment of the disclosure;
FIG. 3 is a schematic diagram of another interface interaction provided by an embodiment of the disclosure;
FIG. 4 is a schematic diagram of a display interface provided by an embodiment of the disclosure;
FIG. 5 is a schematic diagram of another interface interaction provided by an embodiment of the disclosure;
FIG. 6 is a schematic structural diagram of an apparatus for information presentation provided by an embodiment of the disclosure; and
FIG. 7 is a schematic structural diagram of an electronic device provided by an embodiment of the disclosure.

### DETAILED DESCRIPTION

In order to make objectives, technical solutions and advantages of the embodiments of the disclosure clearer, the technical solutions in the embodiments of the disclosure will be clearly and completely described below with reference to the accompanying drawings in the embodiments of the disclosure. Apparently, the described embodiments are part of the embodiments of the disclosure, rather than all of them. All other embodiments obtained by those skilled in the art based on the embodiments of the disclosure without creative efforts shall fall within the scope of the disclosure.

It can be understood that, before the technical solutions disclosed by the embodiments of the disclosure are used, types, usage scopes, usage scenarios and the like of personal information involved in the disclosure should be informed to the users and obtain user authorization in an appropriate manner according to the relevant laws and regulations.

For example, in response to receiving an active request from a user, prompt information is sent to the user to explicitly prompt the user that the requested operation will need to obtain and use personal information of the user. Therefore, the user can autonomously select whether to provide personal information to software or hardware which executes the operations of the technical solution of the disclosure according to the prompt information.

As an optional but non-limiting implementation, in response to receiving the active request of the user, a manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It may be understood that the foregoing informing and obtaining a user authorization process is merely illustrative, and does not constitute a limitation on implementations of the disclosure, and other manners that meet related laws and regulations may also be applied to the implementations of the disclosure.

To solve the technical problems of relatively limited content presented in a current function interface and relatively monotonous interaction mode, the disclosure provides a method, apparatus, device, computer readable storage medium and product for information presentation.

It should be noted that the method, apparatus, device, computer readable storage medium and product for information presentation provided by the disclosure may be applied to any scenario in which information is presented on an information presentation interface.

When a user uses an Internet application, an information presentation interface with a predetermined function may be displayed by triggering a predetermined operation. However, if the user has not authorized the predetermined function, the information presentation interface does not present any content associated with other users. The current user needs to manually authorize the predetermined function to view the information presentation interface, and this operation is often cumbersome. In addition, the content presented in the information presentation interface is relatively limited, and the interaction mode is rather monotonous.

In order to quickly view the content presented in the information presentation interface, a predetermined setting control may be displayed in the information presentation interface. Therefore, the user can quickly realize an authorization for the predetermined function by a triggering operation on the setting control.

In addition, in order to enrich the presented content in the information presentation interface, when the user has not authorized the predetermined function, the user identifier may be presented in a blurred display state. After detecting that the user has authorized the predetermined function based on the setting control, the display state of the user identifier may be switched, to present the user identifier in a clear display state.

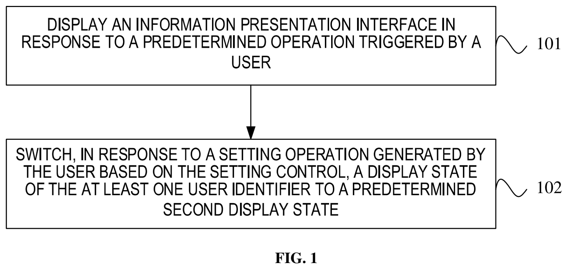

FIG. 1 is a schematic flowchart of a method for information presentation provided by an embodiment of the disclosure. The method includes the following steps.

At step 101, an information presentation interface is displayed in response to a predetermined operation triggered by a user. The information presentation interface includes at least one user identifier corresponding to the user meeting a predetermined condition and a predetermined setting control, and the at least one user identifier is displayed based on a predetermined first display state respectively.

An execution body of this embodiment is an apparatus for information presentation, and the apparatus for information presentation may be coupled into a terminal device. Therefore, the information presentation operation may be performed based on the triggering operation by the user on the terminal device. Alternatively, the apparatus for information presentation may also be coupled into a server, and the server is communicatively connected to the terminal device. Therefore, the server may perform information interaction with the terminal device, and control the terminal device to implement the operation for information presentation.

In this implementation, the user may trigger the predetermined operation for the terminal device. The predetermined operation includes, but is not limited to, a movement operation by the user for the terminal device, an operation triggered by the user through human-computer interaction, a triggering operation by the user through a predetermined function control, and the like.

The information presentation interface may be displayed in response to a predetermined operation triggered by the user. In the information presentation interface, at least one user identifier corresponding to the user meeting a predetermined condition may be presented. The information presentation interface may be a presentation interface corresponding to a certain predetermined function. For example, the user may perform a shaking operation on the terminal device, and in response to the shaking operation, an information presentation interface associated with the shaking operation may be presented. The information presentation interface may include at least one user identifier of the user performing a shaking operation on the terminal device at the same time as the shaking operation by the user.

Further, in order to enrich presentation effect in the information presentation interface, the at least one user identifier may be displayed in a predetermined first display state. The first display state may be a blurred display state. Specifically, presentation of the blurred display state may be achieved by performing mosaic processing on respective user identifier. Alternatively, a layer of blur mask may be added over the respective user identifier to achieve presentation of the blurred display state. It may be understood that the first display state may be any display state such that the user identifier cannot be recognized. The disclosure is not limited thereto.

Alternatively, a setting control is further displayed in the information presentation interface. The user may perform a setting operation by triggering the setting control. For different predetermined operations, the setting controls may be different controls, which is not limited in the disclosure. For example, the predetermined operation may be a shaking operation on the terminal device. Correspondingly, the setting control may be an authorization control for a predetermined permission.

At step 102, in response to a setting operation generated by the user based on the setting control, a display state of the at least one user identifier is switched to a predetermined second display state.

In this implementation, the user may generate a setting operation by triggering the setting control. The triggering operation includes, but is not limited to, a single clicking operation, a double clicking operation, a long pressing operation, a dragging operation and other triggering operations. After detecting that the user has generated the setting operation, the display state of the at least one user identifier may be switched. The at least one user identifier of the first display state is switched to a second display state.

Optionally, the first display state is a blurred display state, and the second display state is a clear display state. Before the user triggers the setting operation, at least one user identifier may be displayed in a blurred state. After detecting that the user has performed the setting operation, the blurred at least one user identifier may be switched to be in a clear state.

As an implementable manner, the first display state may indicate displaying the user identifier in a common display state. The second display state may indicate displaying decoration content in an area associated with the user identifier to decorate the user identifier. In this implementation, in response to a predetermined operation triggered by the user, the user identifier may be displayed in a common display state in the information presentation interface. When it is detected that the setting operation is generated by the user through the setting control, the decoration content may be displayed in an area associated with the user identifier.

Optionally, on the basis of any of the above embodiments, the first display state is a blurred display state, and step 102 includes:

switching, in response to the setting operation generated by the user based on the setting control, the display state of the at least one user identifier to a clear display state .

In this embodiment, the first display state is a blurred display state, and correspondingly, the second display state is a clear display state.

After displaying the information presentation interface, the user may generate a setting operation by triggering the setting control. In response to the setting operation, the display state of the at least one user identifier may be switched from the blurred state to the clear display state.

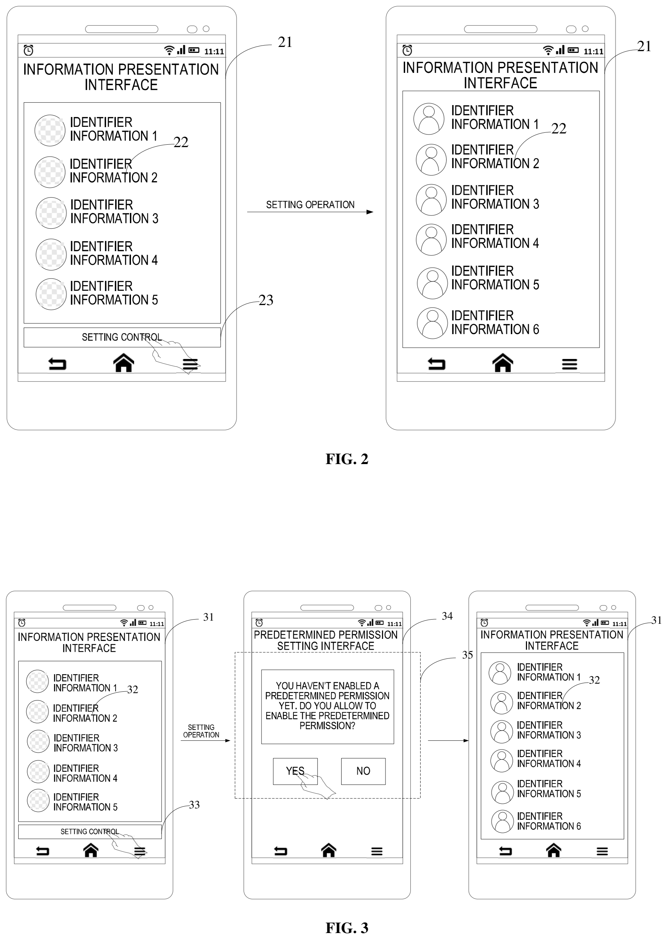

FIG. 2 is a schematic diagram of an interface interaction provided by an embodiment of the disclosure. As shown in FIG. 2, at least one user identifier 22 of a user with a first display state and a predetermined setting control 23 may be presented in an information presentation interface 21. In response to a triggering operation by the user on the setting control 23, a setting operation is implemented based on the setting control 23, and at least one user identifier 22 of the user in a second display state is presented in the information presentation interface 21. The first display state may be a blurred display state, and the second display state may be a clear display state.

In the method for information presentation provided in this embodiment, in response to a predetermined operation triggered by the user, the at least one user identifier corresponding to the user meeting a predetermined condition and the predetermined setting control are displayed in the information presentation interface in the predetermined first display state. In this way, the display state of the at least one user identifier may be switched to the predetermined second display state in response to the setting operation generated by the user based on the setting control. The presentation effect in the information presentation interface is enriched, and interactive operations in the information presentation interface is enriched.

Optionally, based on any of the foregoing embodiments, step 101 includes:
determining, in response to a movement operation of the user on a terminal device, a motion attribute corresponding to the movement operation.

If the motion attribute meets a predetermined information presentation condition, the information presentation interface is displayed.

In this embodiment, the user may perform the movement operation on the terminal device, and control the terminal device to display the information presentation interface based on the movement operation.

Optionally, in response to the movement operation performed by the user on the terminal device, the motion attribute corresponding to the movement operation is determined. The motion attribute includes, but is not limited to, one or more of a motion direction, a motion trajectory, a motion speed, a motion acceleration, and a motion angle.

As an implementable manner, the motion attribute may be obtained by using any method that enables determination of the motion attribute, such as a gyroscope, an accelerometer, and a speed sensor, which is not limited in the disclosure.

Further, after determining the motion attribute, it may be determined whether the motion attribute meets the predetermined information presentation condition. The information presentation condition includes, but is not limited to, a condition that a motion trajectory matches a predetermined trajectory, a condition that a motion speed is greater than a predetermined speed threshold, a condition that a motion angle exceeds a predetermined angle threshold, and the like. The user may set the information presentation condition according to actual needs, which is not limited in the disclosure. If the motion attribute meets the predetermined information presentation condition, the information presentation interface may be displayed.

The at least one user meeting the predetermined condition includes at least one user performing the predetermined operation within a predetermined time range.

Taking a practical application as an example, the predetermined information presentation condition may be that the motion trajectory of the terminal device matches the predetermined motion trajectory. For example, the predetermined motion trajectory may be an up-down movement, a left-right movement, a movement according to a predetermined pattern, and the like. Therefore, after obtaining the motion attribute, it may be detected whether the motion attribute matches the predetermined motion trajectory. If the motion attribute matches the predetermined motion trajectory, the information presentation interface may be displayed, and the at least one user identifier of the user of the terminal device that is moved according to the predetermined motion trajectory within the predetermined time range is displayed in the predetermined first display state in the information presentation interface.

According to the method for information presentation provided by the embodiment, when it is detected that the current motion attribute of the terminal device meets the predetermined information presentation condition, the information presentation interface is displayed, so that conversion of interface display content can be realized based on the movement operation of the user. The interaction mode is enriched, and the display content in the display interface is enriched.

Further, on the basis of any of the above embodiments, step 102 includes:
displaying, in response to a triggering operation by the user based on the setting control, a predetermined permission setting interface that is predetermined.

The display state of the at least one user identifier is switched to the predetermined second display state in response to a predetermined permission enabling operation generated by the user in the permission setting interface.

In this embodiment, if the user does not enable a certain predetermined permission, the at least one user identifier may be displayed in the first display state, and when the user enables the predetermined permission, the at least one user identifier may be displayed in the second display state. Therefore, the user may perform an enabling operation on the predetermined permission through the setting control, to implement the switching operation on the at least one user identifier display state.

Optionally, in response to the triggering operation by the user on the setting control, a predetermined permission setting interface that is predetermined may be displayed, so that the user may implement an authorization operation for the predetermined permission in the predetermined permission setting interface. The triggering operation includes, but is not limited to, a triggering operation such as a single clicking operation, a double clicking operation, a long pressing operation, and a dragging operation, which is not limited in the disclosure.

Further, the permission setting interface may display description information corresponding to the predetermined permission and the permission setting control. The user may learn the predetermined permission based on the description information, and perform a setting operation of the predetermined permission based on the permission setting control. The permission setting control includes an enabling control and a temporarily-not-enabling control. In response to a triggering operation by the user on the enabling control, a predetermined permission enabling operation generated by the user in the permission setting interface is obtained. The display state of the at least one user identifier may be switched to the predetermined second display state based on the predetermined permission enabling operation.

As an implementable manner, the predetermined permission may be a browsing permission for the user information. After the user generates the predetermined permission enabling operation in the permission setting interface, other users may perform a browsing operation on the user information. It should be noted that each user in the information presentation interface that presents the user identifier with the second display state has passed the authorization operation of the user.

FIG. 3 is a schematic diagram of another interface interaction provided by an embodiment of the disclosure. As shown in FIG. 3, at least one user identifier 32 of a user with a first display state and a predetermined setting control 33 may be presented in an information presentation interface 31. In response to a triggering operation by the user on the setting control 33, a predetermined permission setting interface 34 may be displayed, and a permission setting control 35 that is predetermined may be displayed in the predetermined permission setting interface 34. In response to a triggering operation by the user on the permission setting control 35, the display state of the at least one user identifier may be switched to the predetermined second display state. The first display state may be a blurred display state, and the second display state may be a clear display state. It may be understood that the user identifier 32 may further include user nickname information (for example, identifier information 1 in FIG. 3), and some of characters of the nickname information in the first display state may be hidden or blurred.

According to the method for information presentation provided by the embodiment, the display state of the at least one user identifier of the user in the information presentation interface is adjusted in response to the predetermined permission enabling operation generated by the user based on the setting control, so that the display effect in the information presentation interface can be enriched. In addition, by displaying the setting control, the user can quickly perform the authorization operation on the predetermined permission based on the setting control, and the efficiency of enabling the predetermined permission is improved.

Further, on the basis of any of the above embodiments, the predetermined operation is associated with a predetermined target event, and the information presentation interface further includes an interaction control associated with the at least one the user identifier.

After step 102, the method further includes:
transferring, based on a triggering operation by the user on the interaction control, a virtual resource associated with the target event to the user.

In this embodiment, the predetermined operation may be associated with a predetermined target event. For example, the user may participate in a predetermined activity by performing a shaking operation on the terminal device. Alternatively, the user may perform operations such as grabbing red packets by performing a shaking operation on the terminal device. Alternatively, the user may participate in a promotion of a merchant by performing a shaking operation on the terminal device.

Optionally, the target event may be associated with a virtual resource. Following the previous example, when the target event is a promotion of a merchant, the virtual resource may be a coupon corresponding to the merchant. When the target event is a red packet grabbing operation, the virtual resource may be a red packet or the like issued by the user.

In order to enable the user to participate in the target event in the information presentation interface, the information presentation interface further includes at least one interaction control associated with the user identifier. The interaction control includes a follow control.

Further, based on the triggering operation by the user on the interaction control, the virtual resource associated with the target event may be transferred to the user.

Optionally, in response to the triggering operation by the user on the interaction control, the virtual resource associated with the target event may be directly transferred to the user. Alternatively, in response to the triggering operation by the user on the interaction control, the virtual resource associated with the target event may be transferred to the user after the user performs other predetermined subsequent operations. The subsequent operation includes, but is not limited to, an interaction operation among the users associated with the interaction control.

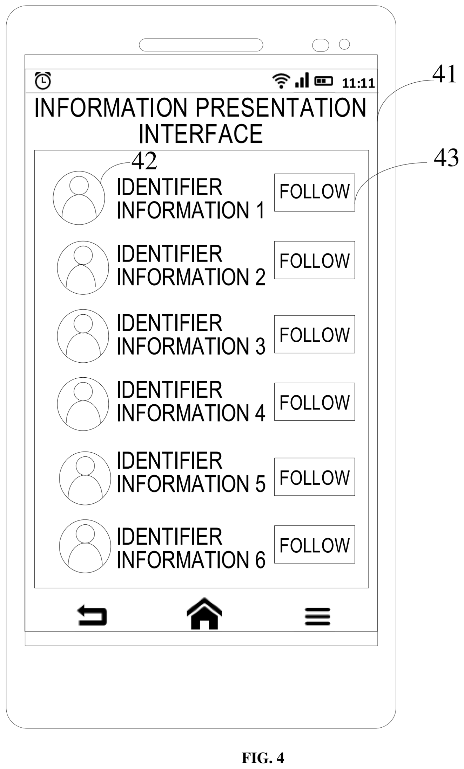

FIG. 4 is a schematic diagram of a display interface provided by an embodiment of the disclosure. As shown in FIG. 4, at least one user identifier 42 of a user with a second display state is presented in an information presentation interface 41, a display area associated with respective user identifier 42 displays an interaction control 43 associated with the user identifier 42 . The user may transfer the virtual resource associated with the target event to the user through a triggering operation on the interaction control 43.

According to the method for information presentation provided by the embodiment, a transferring operation for the virtual resource is performed in response to the triggering operation by the user on the interaction control, so that the presented content and the interaction mode in the information presentation interface can be enriched. In addition, the virtual resource can be quickly transferred through the triggering operation on the interaction control.

Optionally, on the basis of any of the above embodiments, virtual resources associated with different user identifiers are different. Transferring the virtual resource associated with the target event to the user based on the triggering operation by the user on the interaction control includes:

determining, based on a triggering operation by the user on at least one interaction control, at least one user identifier associated with the at least one interaction control.

A virtual resource associated with each user identifier triggered by the user is transferred to the user.

In this embodiment, the virtual resources associated with each user identifier may be different virtual resources. Following the previous example, when a target event is the promotion of the merchant, the virtual resources associated with each user identifier may be different coupons respectively.

Optionally, when the virtual resources associated with each user identifier are different, at least one user identifier associated with the at least one interaction control is determined in response to a triggering operation by the user on the at least one interaction control. At least one virtual resource associated with at least one user identifier triggered by the user is determined respectively, and the at least one virtual resource is transferred to the user.

According to the method for information presentation provided by the embodiment, different virtual resources are predetermined for each user identifier, so that the transferring operation of the different virtual resources may be performed based on the triggering operation by the user on different user identifiers, and the virtual resource transferring efficiency is improved.

Optionally, on the basis of any of the above embodiments, virtual resources associated with different user identifiers are the same, and transferring the virtual resources associated with the target event to the user based on the triggering operation by the user on the interaction control includes:
determining, based on a triggering operation by the user on at least one interaction control, a number of interaction controls triggered by the user.

Virtual resources matching the number are transferred to the user.

In this embodiment, virtual resources associated with different user identifiers are the same. The user may implement a single transfer or a batch transfer of the virtual resources by a triggering operation on the one or more interaction controls.

A number of interaction controls triggered by the user is determined based on a triggering operation by the user on the at least one interaction control. The virtual resources matching the number are transferred to the user according to the number of the interaction controls triggered by the user.

Taking a practical application as an example, each user identifier is associated with the same virtual resource. In response to the triggering operation by the user on three user identifiers, three pieces of virtual resources may be transferred to the user.

According to the method for information presentation provided by the embodiment, the number of interaction controls triggered by the user is determined, the batch transferring operation for the virtual resources may be performed based on the number, and virtual resource transferring efficiency is improved. In addition, the number of transferred virtual resources can be more in line with the personalized requirement of the user.

Optionally, on the basis of any of the above embodiments, step 101 includes:
displaying the information presentation interface in response to a triggering operation by the user on a predetermined guest control.

In this embodiment, the predetermined operation may be a viewing operation by the user on guest information.

Optionally, the guest control may be preset, and the user may, based on the guest control, view users that have viewed the content presentation interface associated with the user or have viewed a historical posted work of the user within a predetermined time range.

The information presentation interface is displayed in response to a triggering operation by the user on the predetermined guest control. The information presentation interface displays at least one user identifier corresponding to a user meeting a predetermined condition.

The at least one user meeting the predetermined condition includes at least one user that has viewed media content historically posted by the user, and/or at least one user that has accessed a content presentation interface associated with the user.

It should be noted that, if the user temporarily has not enabled the guest permission, the user cannot view the at least one user meeting the predetermined condition in the information presentation interface. In this case, the at least one user identifier corresponding to the user meeting the predetermined condition may be displayed in a predetermined first display state.

According to the method for information presentation provided by the embodiment, when the triggering operation by the user on the guest control is detected, the information presentation interface is displayed, so that the switching and display of the interface can be quickly performed based on the triggering operation by the user, making the content displayed in the display interface more in line with the personalized requirement of the user.

Further, on the basis of any of the above embodiments, step 102 includes:
displaying a predetermined guest permission setting interface in response to the triggering operation by the user based on the setting control.

The display state of the at least one user identifier is switched to the predetermined second display state in response to the guest permission enabling operation generated by the user in the guest permission setting interface.

In this embodiment, the user may implement enabling of the guest permission through a predetermined setting control in the information presentation interface. The predetermined guest permission setting interface is displayed in response to the triggering operation by the user based on the setting control.

Optionally, description information corresponding to the guest permission and a guest permission setting control may be displayed in the guest permission setting interface. The guest permission setting control may include an enabling control and a temporarily-not-enabling control. The user may learn the guest permission based on the description information in the guest permission setting interface.

Further, in response to the guest permission enabling operation generated by the user in the guest permission setting interface, the display state of the at least one user identifier is switched to the predetermined second display state, so that the user can view the at least one user meeting the predetermined condition.

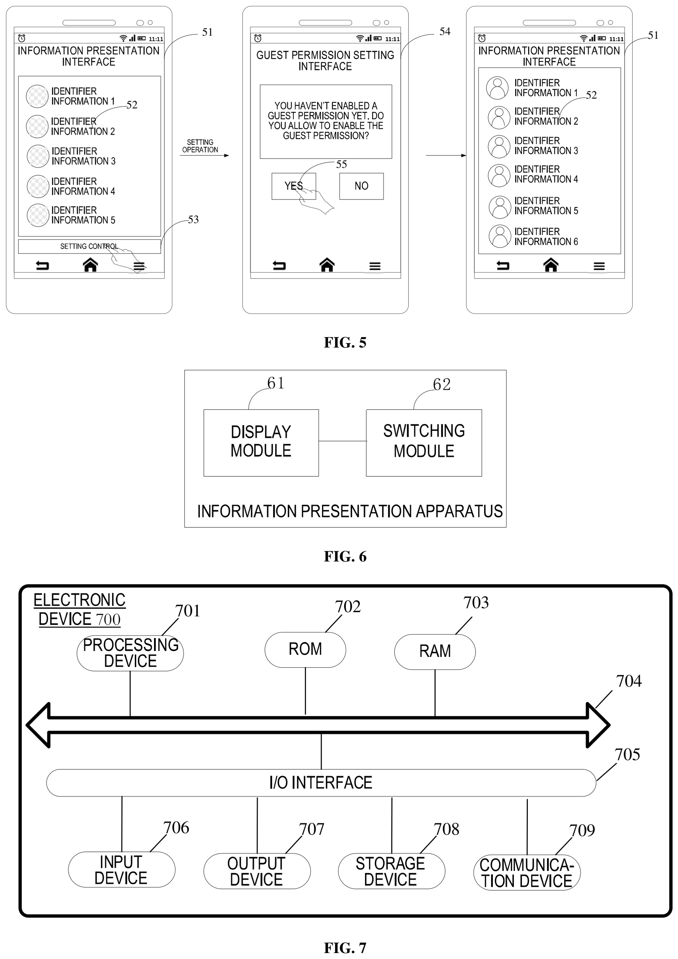

FIG. 5 is a schematic diagram of another interface interaction provided by an embodiment of the disclosure. As shown in FIG. 5, in response to a triggering operation by a user on a predetermined guest control, an information presentation interface 51 is displayed. The information presentation interface 51 may present at least one user identifier 52 of a user with a first display state and a predetermined setting control 53. In response to a triggering operation by the user on the setting control 53, a predetermined guest permission setting interface 54 is displayed. The guest permission setting interface 54 includes a predetermined enabling control 55. In response to the guest permission enabling operation generated by the user triggering the enabling control 55 in the guest permission setting interface 54, the display state of the at least one user identifier 52 may be switched to the second display state. It may be understood that the user identifier 52 may further include user nickname information (for example, identifier information 1 in FIG. 5), and some of characters of the nickname information in the first display state may be hidden or blurred.

According to the method for information presentation provided by the embodiment, the display state of the at least one user identifier of the user in the information presentation interface is adjusted in response to the guest permission enabling operation generated by the user based on the setting control, so that the display effect in the information presentation interface can be enriched. In addition, by displaying the setting control, the user can quickly perform the authorization operation on the guest permission based on the setting control, and the efficiency of enabling the guest permission is improved.

FIG. 6 is a schematic structural diagram of an apparatus for information presentation provided by an embodiment of the disclosure. As shown in FIG. 6, the apparatus includes a display module 61 and a switching module 62. The display module 61 is configured to display an information presentation interface in response to a predetermined operation triggered by a user. The information presentation interface includes at least one user identifier corresponding to the user meeting a predetermined condition and a predetermined setting control, and the at least one user identifier is displayed based on a predetermined first display state respectively. The switching module 62 is configured to switch, in response to a setting operation generated by the user based on the setting control, a display state of the at least one user identifier to a predetermined second display state.

Further, on the basis of any of the above embodiments, the display module is configured to: determine, in response to a movement operation of the user on a terminal device, a motion attribute corresponding to the movement operation. The information presentation interface is displayed if the motion attribute meets a predetermined information presentation condition.

Further, on the basis of any of the above embodiments, the at least one user meeting the predetermined condition includes at least one user performing the predetermined operation within a predetermined time range.

Further, on the basis of any of the above embodiments, the switching module is configured to: display, in response to a triggering operation by the user based on the setting control, a predetermined permission setting interface that is predetermined. The display state of the at least one user identifier is switched to the predetermined second display state in response to a predetermined permission enabling operation generated by the user in the permission setting interface.

Further, on the basis of any of the above embodiments, the predetermined operation is associated with a predetermined target event, and the information presentation interface further includes an interaction control associated with the at least one user identifier. The apparatus further includes: a transferring module configured to transfer, based on a triggering operation by the user on the interaction control, a virtual resource associated with the target event to the user.

Further, on the basis of any of the above embodiments, virtual resources associated with different user identifiers are different. The transferring module is configured to: determine, based on a triggering operation by the user on at least one interaction control, at least one user identifier associated with the at least one interaction control. A virtual resource associated with each user identifier triggered by the user is transferred to the user. Alternatively, virtual resources associated with different user identifiers are the same, and the transferring module is configured to: determine, based on a triggering operation by the user on at least one interaction control, a number of interaction controls triggered by the user. Virtual resources matching the number are transferred to the user.

Further, on the basis of any of the above embodiments, the interaction control includes a follow control.

Further, on the basis of any of the above embodiments, the display module is configured to: display the information presentation interface in response to a triggering operation by the user on a predetermined guest control.

Further, on the basis of any of the above embodiments, the at least one user meeting the predetermined condition includes at least one user that has viewed media content historically posted by the user, and/or at least one user that has accessed a content presentation interface associated with the user.

Further, on the basis of any of the above embodiments, the first display state is a blurred display state, and the switching module is configured to: switch, in response to the setting operation generated by the user based on the setting control, the display state of the at least one user identifier to a clear display state.

The device provided in this embodiment may be configured to perform the technical solutions in the above method embodiments, and implementation principles and technical effects thereof are similar, and details are not described herein again in this embodiment.

**In** order to implement the above embodiments, an embodiment of the disclosure further provides an electronic device. The electronic device includes: a processor and a memory;
the memory storing computer executable instructions;
the processor executing the computer executable instructions stored in the memory, causing the processor to perform the method for information presentation of any of the above embodiments.

FIG. 7 is a schematic structural diagram of an electronic device provided by an embodiment of the disclosure, as shown in FIG. 7, an electronic device 700 may be a terminal device or a server. The terminal device may include, but is not limited to, a mobile terminal such as a mobile phone, a notebook computer, a digital broadcast receiver, a personal digital assistant (PDA), a portable android device (PAD), a portable media player (PMP), a vehicle-mounted terminal (for example, a vehicle-mounted navigation terminal), and the like, and a fixed terminal such as a digital TV, a desktop computer, and the like. The electronic device shown in FIG. 7 is merely an example, and should not constitute any limitation on the functionality and scope of use of the embodiments of the disclosure.

As shown in FIG. 7, the electronic device 700 may include a processing device (for example, a central processor, a graphics processor, etc.) 701, that may perform various appropriate actions and processing according to a program stored in a read only memory (ROM) 702 or a program loaded into a random access memory (RAM) 703 from a storage device 708. In the RAM 703, various programs and data required for the operation of the electronic device 700 are also stored. The processing device 701, the ROM 702, and the RAM 703 are connected to each other through a bus 704. An input/output (I/O) interface 705 is also connected to the bus 704.

Generally, the following devices may be connected to the I/O interface 705: an input device 706 including, for example, a touchscreen, a touchpad, a keyboard, a mouse, a camera, a microphone, an accelerometer, a gyroscope, etc.; an output device 707 including, for example, a liquid crystal display (LCD), a speaker, a vibrator, etc.; a storage device 708 including, for example, a magnetic tape, a hard disk, etc.; and a communication device 709. The communication device 709 may allow the electronic device 700 to communicate wirelessly or wired with other devices to exchange data. Although FIG. 7 shows the electronic device 700 having various devices, it should be understood that it is not required to implement all illustrated devices or include all illustrated devices. More or fewer devices may alternatively be implemented or provided.

In particular, according to embodiments of the disclosure, the process described above with reference to the flowchart may be implemented as a computer software program. For example, the embodiments of the disclosure include a computer program product comprising a computer program carried on a computer readable medium, the computer program comprising program code for performing the method as shown in the flowchart. In such embodiments, the computer program may be downloaded and installed from the network through the communication device 709, or installed from the storage device 708, or installed from the ROM 702. When the computer program is executed by the processing device 701, the above-described functions defined in the method of the embodiments of the disclosure are performed.

It should be noted that the computer-readable medium described above in the disclosure may be a computer-readable signal medium, a computer-readable storage medium, or any combination thereof. The computer-readable storage medium may be, for example, but not limited to, an electronic, magnetic, optical, electromagnetic, infrared, or semiconductor system, apparatus, or device, or any combination thereof. More specific examples of the computer-readable storage media may include, but are not limited to, an electrical connection having one or more wires, a portable computer diskette, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the foregoing. In the disclosure, a computer-readable storage medium may be any tangible medium containing or storing a program that may be used by or in connection with an instruction execution system, apparatus, or device. In the disclosure, a computer-readable signal medium may include a propagated data signal in baseband or as part of a carrier wave, where the computer readable program code is carried. Such a propagated data signal may take any of a variety of forms including, but not limited to, an electromagnetic signal, an optical signal, or any suitable combination of the foregoing. The computer-readable signal medium may also be any computer-readable medium other than a computer-readable storage medium that may send, propagate, or transmit a program for use by or in connection with an instruction execution system, apparatus, or device. The program code embodied on the computer-readable medium may be transmitted with any suitable medium, including, but not limited to: a wire, an optical cable, RF (radio frequency), and the like, or any suitable combination of the foregoing.

In order to implement the above embodiments, an embodiment of the disclosure further provides a computer-readable storage medium, where the computer-readable storage medium stores computer-executable instructions, and when performed by a processor, implementing the method for information presentation according to any of the above embodiments.

In order to implement the above embodiments, an embodiment of the disclosure further provides a computer program product, including a computer program, when performed by a processor, implementing the method for information presentation according to any of the above embodiments.

The computer-readable medium described above may be included in the electronic device; or may be separately present without being assembled into the electronic device.

The computer-readable medium carries one or more programs, and when the one or more programs are executed by the electronic device, the electronic device is caused to perform the method illustrated in the above embodiments.

Computer program code for performing operations of the disclosure may be written in one or more programming languages or any combination of the programming languages, including object-oriented programming languages, such as Java, Smalltalk, C++, and conventional procedural programming languages, such as the "C" language or similar programming languages. The program code may execute entirely on a user computer, partly on a user computer, as a stand-alone software package, partly on a user computer and partly on a remote computer, or entirely on a remote computer or server. In the case of involving a remote computer, the remote computer may be connected to the user computer through any type of network, including a local area network (LAN) or a wide area network (WAN), or may be connected to an external computer (for example, using an Internet service provider for Internet connection).

The flowcharts and block diagrams in the figures illustrate architectures, functionalities, and operations of possible implementations of systems, methods, and computer program products according to various embodiments of the disclosure. In this regard, each block in the flowcharts or block diagram may represent a module, program segment, or portion of code that includes one or more executable instructions for implementing the specified logical function(s). It should also be noted that in some alternative implementations, the functions noted in the blocks may also occur in a different order than that illustrated in the figures. For example, two consecutively represented blocks may actually be performed substantially in parallel, or the blocks may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The unit(s) involved in the embodiments of the disclosure may be implemented in software, or may be implemented in hardware. The name of a unit does not constitute a limitation to the unit itself in some cases, for example, the first obtaining unit may be further described as "a unit obtaining at least two Internet Protocol addresses".

The functions described above may be performed, at least in part, by one or more hardware logic components. For example, without limitation, example types of hardware logic components that may be used include: field programmable gate arrays (FPGAs), application specific integrated circuits (ASICs), application specific standard parts (ASSPs), system-on-chip (SOCs), complex programmable logic devices (CPLDs), and the like.

**In** the context of the disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor systems, apparatus, or devices, or any suitable combination of the foregoing. More specific examples of machine-readable storage media may include an electrical connection based on one or more lines, a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage device, an magnetic storage device, or any suitable combination of the foregoing.

In a first aspect, a method for information presentation is provided according to one or more embodiments of the disclosure, including:
displaying an information presentation interface in response to a predetermined operation triggered by a user, wherein the information presentation interface comprises at least one user identifier corresponding to the user meeting a predetermined condition and a predetermined setting control, and the at least one user identifier is displayed based on a predetermined first display state respectively;
switching, in response to a setting operation generated by the user based on the setting control, a display state of the at least one user identifier to a predetermined second display state.

According to one or more embodiments of the disclosure, displaying the information presentation interface in response to the predetermined operation triggered by the user includes:
determining, in response to a movement operation of the user on a terminal device, a motion attribute corresponding to the movement operation;
displaying the information presentation interface in accordance with the motion attribute meeting a predetermined information presentation condition.

According to one or more embodiments of the disclosure, the at least one user meeting the predetermined condition includes at least one user performing the predetermined operation within a predetermined time range.

According to one or more embodiments of the disclosure, switching, in response to the setting operation generated by the user based on the setting control, the display state of the at least one user identifier to the predetermined second display state includes:
displaying, in response to a triggering operation by the user based on the setting control, a predetermined permission setting interface that is predetermined;
switching, in response to a predetermined permission enabling operation generated by the user in the permission setting interface, the display state of the at least one user identifier to the predetermined second display state.

According to one or more embodiments of the disclosure, the predetermined operation is associated with a predetermined target event, the information presentation interface further includes an interaction control associated with the at least one user identifier;
after switching, in response to the setting operation generated by the user based on the setting control, the display state of the at least one user identifier to the predetermined second display state, the method further comprises:
transferring, based on a triggering operation by the user on the interaction control, a virtual resource associated with the target event to the user.

According to one or more embodiments of the disclosure, virtual resources associated with different user identifiers are different; and transferring, based on the triggering operation by the user on the interaction control, the virtual resource associated with the target event to the user includes:
determining, based on a triggering operation by the user on at least one interaction control, at least one user identifier associated with the at least one interaction control;
transferring a virtual resource associated with each user identifier triggered by the user to the user;
or, virtual resources associated with different user identifiers are the same, transferring, based on the triggering operation by the user on the interaction control, the virtual resource associated with the target event to the user comprises:
   determining, based on a triggering operation by the user on at least one interaction control, a number of interaction controls triggered by the user;
   transferring virtual resources matching the number to the user.

According to one or more embodiments of the disclosure, the interaction control includes a follow control.

According to one or more embodiments of the disclosure, displaying the information presentation interface in response to the predetermined operation triggered by the user includes:
displaying the information presentation interface in response to a triggering operation by the user on a predetermined guest control.

According to one or more embodiments of the disclosure, the at least one user meeting the predetermined condition comprises at least one user that has viewed media content historically posted by the user, and/or at least one user that has accessed a content presentation interface associated with the user.

According to one or more embodiments of the disclosure, the first display state is a blurred display state, switching, in response to the setting operation generated by the user based on the setting control, the display state of the at least one user identifier to the predetermined second display state includes:
switching, in response to the setting operation generated by the user based on the setting control, the display state of the at least one user identifier to a clear display state.

In a second aspect, an apparatus for information presentation is provided according to one or more embodiments of the disclosure, including:
a display module configured to display an information presentation interface in response to a predetermined operation triggered by a user, wherein the information presentation interface comprises at least one user identifier corresponding to the user meeting a predetermined condition and a predetermined setting control, and the at least one user identifier is displayed based on a predetermined first display state respectively;
a switching module configured to switch, in response to a setting operation generated by the user based on the setting control, a display state of the at least one user identifier to a predetermined second display state.

According to one or more embodiments of the disclosure, the display module is configured to:
determine, in response to a movement operation of the user on a terminal device, a motion attribute corresponding to the movement operation;
display the information presentation interface in accordance with the motion attribute meeting a predetermined information presentation condition.

According to one or more embodiments of the disclosure, the at least one user meeting the predetermined condition includes at least one user performing the predetermined operation within a predetermined time range.

According to one or more embodiments of the disclosure, the switching module is configured to:
display, in response to a triggering operation by the user based on the setting control, a predetermined permission setting interface that is predetermined;
switch, in response to a predetermined permission enabling operation generated by the user in the permission setting interface, the display state of the at least one user identifier to the predetermined second display state.

According to one or more embodiments of the disclosure, the predetermined operation is associated with a predetermined target event, the information presentation interface further includes an interaction control associated with the at least one user identifier;
the apparatus further includes:
a transferring module configured to transfer, based on a triggering operation by the user on the interaction control, a virtual resource associated with the target event to the user.

According to one or more embodiments of the disclosure, virtual resources associated with different user identifiers are different; and the transferring module is configured to:
determine, based on a triggering operation by the user on at least one interaction control, at least one user identifier associated with the at least one interaction control;
transfer a virtual resource associated with each user identifier triggered by the user to the user;
or, virtual resources associated with different user identifiers are the same, and the transferring module is configured to:
   determine, based on a triggering operation by the user on at least one interaction control, a number of interaction controls triggered by the user;
   transfer virtual resources matching the number to the user.

According to one or more embodiments of the disclosure, the interaction control includes a follow control.

According to one or more embodiments of the disclosure, the display module is configured to:
display the information presentation interface in response to a triggering operation by the user on a predetermined guest control.

According to one or more embodiments of the disclosure, the at least one user meeting the predetermined condition includes at least one user that has viewed media content historically posted by the user, and/or at least one user that has accessed a content presentation interface associated with the user.

According to one or more embodiments of the disclosure, the first display state is a blurred display state, and the switching module is configured to:
switch, in response to the setting operation generated by the user based on the setting control, the display state of the at least one user identifier to a clear display state.

In a third aspect, an electronic device is provided according to one or more embodiments of the disclosure, including: at least one processor and a memory;
the memory storing computer executable instructions;
the at least one processor executing the computer-executable instructions stored in the memory, causing the at least one processor to perform the method for information presentation of the first aspect and various possible designs of the first aspect.

In a fourth aspect, a computer-readable storage medium is provided according to one or more embodiments of the disclosure, where the computer-readable storage medium stores computer-executable instructions that implement, when executed by a processor, the method for information presentation of the first aspect and various possible designs of the first aspect.

In a fifth aspect, a computer program product is provided, including a computer program, where the computer program, when executed by a processor, implements the method for information presentation of the first aspect and various possible designs of the first aspect.

The above description is merely an illustration of the preferred embodiments of the disclosure and principles of the applied technology. It should be understood by those skilled in the art that the disclosure in the disclosure is not limited to the technical solutions formed by the specific combination of the above technical features, and should also cover other technical solutions formed by any combination of the above technical features or equivalent features thereof without departing from the above disclosed concept. For example, the above features are the technical features having similar functions disclosed in the disclosure (but not limited to) are replaced with each other to form a technical solution.

In addition, while operations are depicted in a particular order, this should not be understood as requiring that these operations be performed in the particular order shown or performed in sequential order. In certain circumstances, multitasking and parallel processing may be advantageous. Likewise, while several specific implementation details are included in the discussion above, these should not be construed as limiting the scope of the disclosure. Certain features described in the context of separate embodiments may also be implemented in combination in a single embodiment. Conversely, various features described in the context of a single embodiment may also be implemented in a plurality of embodiments either individually or in any suitable subcombination.

Although the present subject matter has been described in language specific to structural features and/or methodological acts, it is to be understood that the subject matter defined in the appended claims is not necessarily limited to the specific features or acts described above. On the contrary, the specific features and acts described above are merely exemplary forms of implementing the claims.

## Claims

1. A method for information presentation, comprising:
displaying an information presentation interface in response to a predetermined operation triggered by a user, wherein the information presentation interface comprises at least one user identifier corresponding to the user meeting a predetermined condition and a predetermined setting control, and the at least one user identifier is displayed based on a predetermined first display state respectively;
switching, in response to a setting operation generated by the user based on the setting control, a display state of the at least one user identifier to a predetermined second display state.

2. The method of claim 1, wherein displaying the information presentation interface in response to the predetermined operation triggered by the user comprises:
determining, in response to a movement operation of the user on a terminal device, a motion attribute corresponding to the movement operation;
displaying the information presentation interface in accordance with the motion attribute meeting a predetermined information presentation condition.

3. The method of claim 2, wherein the at least one user meeting the predetermined condition comprises at least one user performing the predetermined operation within a predetermined time range.

4. The method of claim 2, wherein switching, in response to the setting operation generated by the user based on the setting control, the display state of the at least one user identifier to the predetermined second display state comprises:
displaying, in response to a triggering operation by the user based on the setting control, a predetermined permission setting interface that is predetermined;
switching, in response to a predetermined permission enabling operation generated by the user in the permission setting interface, the display state of the at least one user identifier to the predetermined second display state.

5. The method of claim 2, wherein the predetermined operation is associated with a predetermined target event, the information presentation interface further comprises an interaction control associated with the at least one user identifier;
after switching, in response to the setting operation generated by the user based on the setting control, the display state of the at least one user identifier to the predetermined second display state, the method further comprises:
transferring, based on a triggering operation by the user on the interaction control, a virtual resource associated with the target event to the user.

6. The method of claim 5, wherein virtual resources associated with different user identifiers are different; transferring, based on the triggering operation by the user on the interaction control, the virtual resource associated with the target event to the user comprises:
determining, based on a triggering operation by the user on at least one interaction control, at least one user identifier associated with the at least one interaction control;
transferring a virtual resource associated with each user identifier triggered by the user to the user;
or, virtual resources associated with different user identifiers are the same, transferring, based on the triggering operation by the user on the interaction control, the virtual resource associated with the target event to the user comprises:
determining, based on a triggering operation by the user on at least one interaction control, a number of interaction controls triggered by the user;
transferring virtual resources matching the number to the user.

7. The method of claim 5, wherein the interaction control comprises a follow control.

8. The method of claim 1, wherein displaying the information presentation interface in response to the predetermined operation triggered by the user comprises:
displaying the information presentation interface in response to a triggering operation by the user on a predetermined guest control.

9. The method of claim 8, wherein the at least one user meeting the predetermined condition comprises at least one user that has viewed media content historically posted by the user, and/or at least one user that has accessed a content presentation interface associated with the user.

10. The method of any of claims 1-9, wherein the first display state is a blurred display state, switching, in response to the setting operation generated by the user based on the setting control, the display state of the at least one user identifier to the predetermined second display state comprises:
switching, in response to the setting operation generated by the user based on the setting control, the display state of the at least one user identifier to a clear display state.

11. An apparatus for information presentation, comprising:
a display module configured to display an information presentation interface in response to a predetermined operation triggered by a user, wherein the information presentation interface comprises at least one user identifier corresponding to the user meeting a predetermined condition and a predetermined setting control, and the at least one user identifier is displayed based on a predetermined first display state respectively;
a switching module configured to switch, in response to a setting operation generated by the user based on the setting control, a display state of the at least one user identifier to a predetermined second display state.

12. An electronic device, comprising: a processor and a memory;
the memory storing computer-executable instructions;
the processor executing the computer-executable instructions stored in the memory, causing the processor to perform the method for information presentation of any of claims 1 to 10.

13. A computer-readable storage medium, wherein the computer-readable storage medium has computer-executable instructions stored thereon, and the computer-executable instructions implement, when executed by a processor, the method for information presentation of any of claims 1 to 10.

14. A computer program product comprising a computer program, wherein the computer program, when executed by a processor, implements the method for information presentation of any of claims 1 to 10.
